# EUROPEAN PATENT APPLICATION

(11) **EP 4 160 490 A2**
(43) Date of publication of application: **05.04.2023**
(21) Application number: 22216308.1
(22) Date of filing: 23.12.2022
(51) Int. Cl.: G06N 5/02, G06N 5/04

(54) **METHOD AND APPARATUS FOR KNOWLEDGE ANSWERING, METHOD AND APPARATUS FOR GENERATING KNOWLEDGE ANSWERING SYSTEM**

(30) Priority: 24.12.2021 CN 202111608492
(71) Applicant: Beijing Baidu Netcom Science Technology Co., Ltd., Beijing 100085 (CN)
(72) Inventor: SUN, Zhuo, Beijing, 100085 (CN); YANG, Tianxing, Beijing, 100085 (CN); YANG, Chen, Beijing, 100085 (CN)
(74) Representative: advotec.

(57) **Abstract**

A method and an apparatus for knowledge answering, a method and an apparatus for generating a knowledge answering system relate to the fields of intelligent search, knowledge graph, and natural language processing. The method includes: receiving a user question entered by a client, and obtaining a target insurance rule matching the user question from a plurality of insurance rules; searching for an answer in an insurance knowledge graph based on the target insurance rule, in which the insurance knowledge graph is generated based on the plurality of insurance rules; and returning the answer to the client. Therefore, the insurance rule matching the user question is obtained from the plurality of insurance rules, and a more accurate answer is obtained by querying the insurance knowledge graph generated according to the insurance rules based on the matched insurance rule, and the more accurate answer is returned to the client.

## Description

### TECHNICAL FIELD

The invention provides a method and an apparatus for knowledge answering, a method and an apparatus for generating a knowledge answering system, which relates to the field of artificial intelligence, in particular to the fields of intelligent search, knowledge graph, and natural language processing.

### BACKGROUND

With the continuous development of technology, the artificial intelligence technologies have brought great convenience to human life, and intelligent question and answer is one of them, where machines instead of customer service agents are used to answer repeated questions, thereby greatly reducing labor costs.

Currently, the intelligent question and answer is widely applied in specific industries, and most of the existing industry question and answer mechanisms on the market are in one round of question and answer. In a real-world scenario, one round of question and answer is not common for the user. Instead, it is more common to have multiple rounds of questions and answers.

### SUMMARY

The invention provides a method and an apparatus for knowledge answering, a method and an apparatus for generating a knowledge answering system, a device and a storage medium, so as to clarify the user intent and further provide a more precise answer.

According to a first aspect of the invention, a knowledge answering method is performed by an electronic device. The method includes: receiving a user question entered by a client, and obtaining a target insurance rule matching the user question from a plurality of insurance rules; searching for an answer in an insurance knowledge graph based on the target insurance rule, in which the insurance knowledge graph is generated based on the plurality of insurance rules; and returning the answer to the client.

According to a second aspect of the invention, a method for generating a knowledge answering system is performed by an electronic device. The method includes: extracting a plurality of insurance rules based on insurance information by using a pre-trained extraction model; generating an insurance knowledge graph based on the plurality of insurance rules, in which each of the insurance rules is presented as a triplet in the insurance knowledge graph; and generating a reasoning engine based on the plurality of insurance rules, in which the reasoning engine is configured to: receive a user question entered by a client, and obtain a target insurance rule matching the user question from the plurality of insurance rules; search for an answer in the insurance knowledge graph based on the target insurance rule; and return the answer to the client.

According to a third aspect of the invention, a knowledge answering apparatus is provided. The apparatus includes: a match module, a search module and a feedback module. The match module is configured to receive a user question entered by a client, and obtain a target insurance rule matching the user question from a plurality of insurance rules. The search module is configured to search for an answer in an insurance knowledge graph based on the target insurance rule, in which the insurance knowledge graph is generated based on the plurality of insurance rules. The feedback module is configured to return the answer to the client.

According to a fourth aspect of the invention, an apparatus for generating a knowledge answering system is provided. The apparatus includes: an extract module, a graph generation module and an engine generation module. The extract module is configured to extract a plurality of insurance rules based on insurance information by using a pre-trained extraction model. The graph generation module is configured to generate an insurance knowledge graph based on the plurality of insurance rules, in which each of the insurance rules is presented as a triplet in the insurance knowledge graph. The engine generation module is configured to generate a reasoning engine based on the plurality of insurance rules, in which the reasoning engine is configured to: receive a user question entered by a client, and obtain a target insurance rule matching the user question from the plurality of insurance rules; search for an answer in the insurance knowledge graph based on the target insurance rule; and return the answer to the client.

According to a fifth aspect of the invention, an electronic device is provided. The electronic device includes: at least one processor and a memory communicatively coupled to the at least one processor. The memory stores instructions executable by the at least one processor, and when the instructions are executed by the at least one processor, the at least one processor is caused to implement the method according to the first aspect of the invention or the method according to the second aspect of the invention.

According to a sixth aspect of the invention, a non-transitory computer-readable storage medium storing computer instructions is provided. The computer instructions are configured to cause a computer to implement the method according to the first aspect of the invention or the method according to the second aspect of the invention.

According to a seventh aspect of the invention, a computer program product including computer programs is provided. When the computer programs are executed by a processor, the method according to the first aspect of the invention or the method according to the second aspect of the invention is implemented.

According to the technical solution of the embodiments of the invention, the user's intention can be clarified, to further provide a more accurate answer.

It should be understood that the content described in this section is not intended to identify key or important features of the embodiments of the invention, nor is it intended to limit the scope of the invention. Additional features of the invention will be easily understood based on the following description.

### BRIEF DESCRIPTION OF THE DRAWINGS

The drawings are used to better understand the solution and do not constitute a limitation to the invention.
FIG. 1 is a flowchart of the method for knowledge answering according to the first embodiment of the invention.
FIG. 2 is a flowchart of the method for knowledge answering according to the second embodiment of the invention.
FIG. 3 is a flowchart of the method for generating a knowledge answering system according to the third embodiment of the invention.
FIG. 4 is a schematic diagram of the apparatus for knowledge answering according to the fourth embodiment of the invention.
FIG. 5 is a schematic diagram of the apparatus for generating a knowledge answering system according to the fifth embodiment of the invention.
FIG. 6 is a schematic diagram of an electronic device used to implement the knowledge answering method according to the embodiment of the invention.

### DETAILED DESCRIPTION

The following describes the exemplary embodiments of the invention with reference to the accompanying drawings, which includes various details of the embodiments of the invention to facilitate understanding, which shall be considered merely exemplary. For clarity and conciseness, descriptions of well-known functions and structures are omitted in the following description.

The technical solution used in the existing customer scenarios includes: retrieving a historical question and answer database using retrieval techniques or Deep Neural Networks (DNN), determining a similarity, obtaining the first K relevant questions ranked according to the similarity, returning the relevant questions and answers to the user for selection. The disadvantages of this technical solution are that it has high requirements on data of the historical question and answer database, e.g., it cannot be used in a scene without historical question and answer data; the returned answers are not accurate, e.g., the returned questions do not match the user question; and multiple rounds of questions and answers cannot be resolved.

It should be noted that in the technical solution of the invention, the collection, storage, use, processing, transmission, provision and invention of personal information of users involved are handled in accordance with relevant laws and regulations and do not violate public order and morals.

To solve the above technical problems, the invention provides a method and an apparatus for knowledge answering, a method and an apparatus for generating a knowledge answering system, a device and a storage medium, to clarify the user intent and further provide a more precise answer in multiple rounds of questions and answers.

The method and the apparatus for knowledge answering, the method and the apparatus for generating a knowledge answering system, the electronic device and the computer-readable storage medium according to the embodiments of the invention are described with reference to the accompanying drawings.

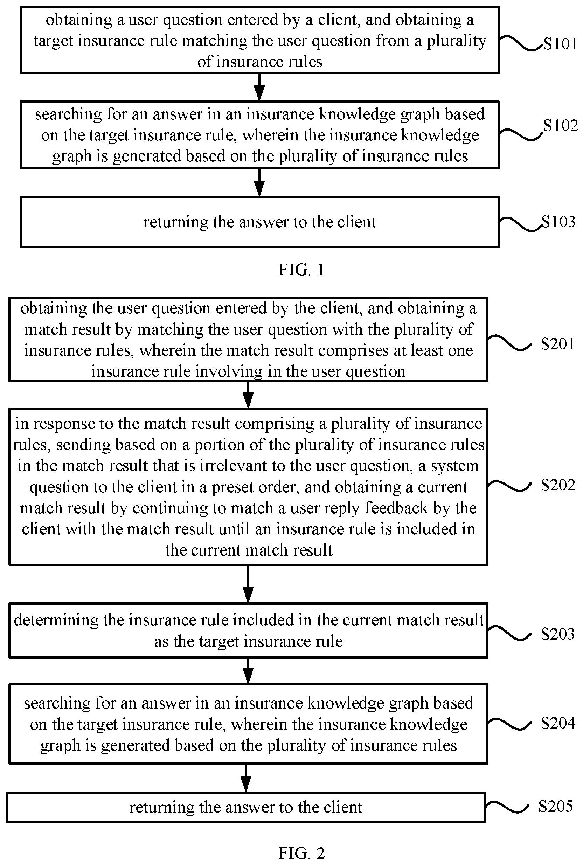

FIG. 1 is a flowchart of the knowledge answering method according to the embodiment of the invention. It is noted that the knowledge answering method of the invention may be applied to a knowledge answering apparatus of the invention. The knowledge answering apparatus may be configured on an electronic device. As illustrated in FIG. 1, the knowledge answering method may include the following steps at S101-S103.

At S101, a user question entered by a client is obtained, and a target insurance rule matching the user question is obtained from a plurality of insurance rules.

In the embodiment of the invention, the plurality of insurance rules are extracted from massive insurance documents. The key information is extracted from the insurance documents, such as the insurance name, the cooling-off period, the policy period and the scope of exclusion. The extracted key information is manually formed into the form of insurance rules. The insurance rules are divided into primary rules and sub-rules to generate interrelationship or subordination relation between the insurance rules, and a triplet is generated based on a relationship among the subjects of each insurance rule.

Obtaining the target insurance rule matching the user question from the plurality of insurance rules refers to locating an insurance rule involving in the user question from the plurality of insurance rules.

There are many cases in the matching process, in very few cases, a certain insurance rule can be directly determined through matching. In most cases, the user question is ambiguous and initially matches to multiple insurance rules in all the insurance rules. At this time, multiple questions are provided for the user based on a portion of the matched insurance rules that is irrelevant the user question, and in the process of asking multiple questions, the actual meaning/ intention of the user question is further clarified. After the user intention is clear, the answer can be searched.

At S102, an answer is searched in an insurance knowledge graph based on the target insurance rule, in which the insurance knowledge graph is generated based on the plurality of insurance rules.

In the embodiment of the invention, in the insurance knowledge graph, each insurance rule is presented as a Subject-Predication-Object (SPO) triplet. Multiple SPO triplets are connected one by one and are written to a graph database corresponding to the insurance knowledge graph. That is, all the insurance rules together constitute a triplet network structure including primary rules and sub-rules.

The relevant answers to the user question are searched in the insurance knowledge graph based on the matched insurance rule.

For example, through multiple rounds of question and answer, it is determined that the question the client really wants to ask is "how long is the cooling-off period of the Yongbang accident insurance 1?", S in the matched insurance rule is "Yongbang accident insurance 1", P is "the cooling-off period", and O can be obtained by searching the graph database based on a graph query sentence.

At S103, the answer is returned to the client.

The answer obtained by searching the insurance knowledge graph is fed back to the client through a reasoning engine.

According to the method for knowledge answering in the invention, the insurance rules matching the user question are obtained from the plurality of insurance rules, a more accurate answer is obtained by querying based on the matched insurance rule, the insurance knowledge graph generated based on the insurance rules, and the answer is fed back to the client.

FIG. 2 is a flowchart of the method for knowledge answering according to the embodiment of the invention. As illustrated in FIG. 2, the method for knowledge answering may include the following steps at S201-S205.

At S201, the user question entered by the client is obtained, and a match result is obtained by matching the user question with the plurality of insurance rules, in which the match result includes at least one insurance rule involving in the user question.

It may be understood that since the user question entered by the client may involve in a lot of invalid information, it is necessary to delete the invalid information first and perform a matching process later, to improve the efficiency.

Optionally, the user question entered by the client is obtained, and invalid contents in the user question are filtered, and the target insurance rule matching the user question is obtained from the plurality of insurance rules based on the filtered user question.

For example, the sentence "I want to ask" in the user question "I want to ask how long can I be reneged on the insurance contract?" is deleted firstly, then the sentence "how long can I be reneged on the insurance contract?" is obtained.

It may be understood that, generally, the user question entered by the client is not very precise and cannot be used to locate a unique insurance rule.

The match result is obtained by matching the user question with the plurality of insurance rules, in which the match result includes at least one insurance rule. That is, multiple insurance rules can be matched based on the user question.

The example of the matching process described above is provided as follows.

When the user question is ambiguous, for example, all the extracted insurance rules are placed in an insurance rule library, the insurance rule library includes 10 kinds of insurance. Since each kind of insurance has a hundred insurance rules, 10 kinds of insurance have 1000 insurance rules. At first, the user question is matched with these 1000 insurance rules.

In Example 1, the user question is "How long is the cooling-off period?", since the user question is ambiguous, 10 matched insurance rules that contain the term "cooling-off period" are obtained.

In a rare case, where the user question is very precise. For example, the user question is "How long is the cooling-off period of XX comprehensive personal accident insurance I?", the user question contains the exact type of insurance, so it is possible to filter 100 insurance rules out of the 1000 insurance rules and locate one of the 100 insurance rules based on the term "cooling-off period". In this case, an insurance rule matching the user question is directly obtained.

There is also an unexpected case where the user question entered by the client has nothing to do with the insurance. For example, if the user is just chatting and the user question entered by the client does not address any insurance rule, for example, "what time do you get to work?", the user question may be ignored and unaddressed, or "This system does not involve this question" is automatically replied. The user may not be questioned based on the contents included in the insurance rule until at least one insurance rule is mentioned in the user question raised by the client.

Optionally, the method for determining whether the user question matches with the insurance rule can include simple judgment and deep judgment.

Optionally, the simple judgment method includes: obtaining a plurality of regularized insurance rules by performing a regular process on the plurality of insurance rules, and obtaining the match result by matching the user question with the plurality of regularized insurance rules.

The regular process is performed on all the existing insurance rules in the insurance rule library. Matching the user question entered by the client with the plurality of insurance rules is that, re.match function of regular expression is directly used to determine whether the user question is matched to an insurance rule. The input of re.match function is the user question, and the processing logic is to match the user question directly to an insurance rule character string, which is simple and efficient.

For example, the user question entered by the client is: "how long is an effectiveness reinstatement period of XX comprehensive personal accident insurance I?", the following insurance rule can be matched accurately by using the simple judgment method: {type of insurance: XX comprehensive personal accident insurance I, reinstatement period: within 2 years after the suspension of this contract, the policyholder can apply for reinstatement of the contract}.

Optionally, the depth judgment method includes: obtaining the match result by determining whether the user question matches each insurance rule through a preset question-answer model, in which the preset question-answer model is configured to perform binary classification determining on inputs consisted of the user question and each insurance rule, i.e., yes if the user question matches the insurance rule, or no if the user question does not match the insurance rule.

The preset question-answer model can segment the natural language, and convert the segmented words into a sequence, and determine the semantic similarity based on the sequence, which can produce deep understanding of the words, and lead to a larger matching range.

Optionally, a structure of the preset question-answer model has a pre-trained Enhanced Representation through Knowledge Integration (ERNIE) model and a full connection (FC) structure. The effectiveness of the ERNIE model is verified on a number of public Chinese datasets, and the effects of the ERNIE model on natural language processing tasks such as language inference, semantic similarity, named entity recognition, sentiment analysis and question answering, are all good. FC can be understood as a fully connected layer, or some multilayer perceptron.

Optionally, the simple judgment method is performed at first, and if there is no match, the deep judgment method is then performed.

At S202, in response to the match result including a plurality of insurance rules, a system question is sent to the client in a preset order based on portions irrelevant to the user question of the insurance rules in the match result, and a current match result is obtained by continuing to match a user reply feedback by the client with the match result until an insurance rule is included in the current match result.

It may be understood that when a complete insurance rule cannot be obtained by matching according to the user question, the query intention of the user is further clarified by means of questioning the user, to obtain the accurate answer desired by the user.

For example, in example 1 at S201, 10 insurance rules are obtained by matching firstly based on the user question. Further, the user is questioned in an order from the primary rule to the sub-rule according to the unmentioned portions of the 10 matched insurance rules.

If the user question is "How long is the cooling-off period?", the primary rule in the 10 insurance rules are the type of insurance or the name of insurance, that is, it is not clear what kind of insurance the "Cooling-off period" belongs to. At this time, the first question sent to the client is "What kind of insurance are you talking about?", and if the client reply is "XX accident insurance 1", an insurance rule including the cooling-off period of XX accident insurance 1 is determined from the 10 insurance rules based on the client reply.

Optionally, the implementation method is judgment, which is implemented through an if-while sentence.

For example, if the user question is "How long is the cooling-off period?" and no insurance rule matching the "accident insurance" is found, the questions are continued to send to the client, such as, "accident insurance 1 or 2?", until a complete insurance rule is matched.

The system question is sent to the client in the preset order. The preset order here is in turn. That is, according to the portions of the initially matched insurance rules that do not involve the user question, questions are sent to the client in the order from primary nodes to sub-nodes. It can also be that questions are raised in multiple rounds based on the initially matched insurance rules until one matched insurance rule is obtained, that is, an accurate insurance rule is located.

When raising a question to the client, if the client provides an answer that does not match any insurance rule in the multiple initially matched insurance rules, that is, if the reply from the client does not correspond to any insurance rule, questioning is stopped. It should be noted that this situation rarely occurs.

Optionally, if the user question from the client does not match any insurance rule, the user question from the client may be terminated.

For example, if the user question from the client is "swimming insurance", but the insurance type does not include the swimming insurance, that is, the user question from the client does not match any insurance rule, then "This question is not included" or other replies is returned, and the question and answer process is terminated.

It should be noted that one or both of the simple judgment method and the deep judgment method mentioned above are used in the matching process of multiple rounds of question and answer.

At S203, the insurance rule included in the current match result is determined as the target insurance rule.

The final matched insurance rule is selected and determined as the target insurance rule, and the target insurance rule is the search basis of the insurance knowledge graph.

At S204, an answer is searched in an insurance knowledge graph based on the target insurance rule, in which the insurance knowledge graph is generated based on the plurality of insurance rules.

Since the insurance knowledge graph is generated based on all the insurance rules, after obtaining the target insurance rule, the target insurance rule is transformed into a graph query sentence that is written via gremlin (i.e., the graph traversal language) and the answer is searched in the insurance knowledge graph based on the graph query sentence.

For example, the matched insurance rule is: insurance name - cooling-off period - time. The answer can be searched directly in the insurance knowledge graph and the answer, such as, "10 days" can be fed back to the client.

At S205, the answer is returned to the client.

The query result fed back from the insurance knowledge graph is determined as the answer of the user question for the client, and the answer after processing is returned to the client.

The searched answer is processed, i.e., it is tuned, and the tuned answer is fed back to the client.

For the tuning process, the following example is provided as follows.

The user question is "How long is the cooling-off period for XX insurance?", and the answer after searching the insurance knowledge graph is "10 days". At this time, instead of sending the answer directly to the client, the user question is combined with the answer to generate a complete answer "The cooling-off period of XX insurance is 10 days", and the complete answer is then fed back to the client.

According to the method for knowledge answering according to the embodiment of the invention, the insurance rule matching the user question is obtained from the plurality of insurance rules through multiple rounds of question and answer, thus the specific meaning of the user question can be clarified through the multiple rounds of question and answer. Then, the only answer can be obtained by querying the insurance knowledge graph generated according to the insurance rules based on the matched insurance rule, and the obtained more accurate answer is returned to the client.

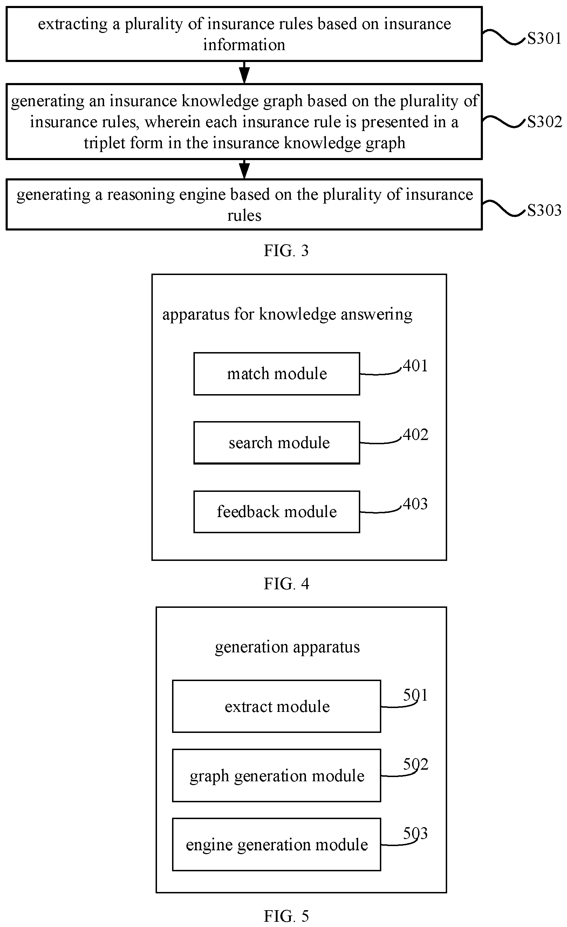

FIG. 3 is a flowchart of the method for generating a knowledge answering system according to the embodiment of the invention. It is to be noted that the method may be applied to an apparatus for generating a knowledge answering system according to the embodiment of the invention. The apparatus may be configured/integrated in an electronic device. As illustrated in FIG. 3, the method may include the following steps.

At S301, a plurality of insurance rules are extracted based on insurance information.

In a possible implementation, an extraction model is used to extract the insurance rules based on a large number of insurance documents.

For example, the process of extracting the insurance rules from multiple insurance entries by using the extraction model is provided as follows.

There is a batch of annotated insurance contracts, which are obtained by annotating a first type of insurance contracts with locations of key information, i.e., selecting the locations throughout the whole insurance contract. The extraction model is trained based on the multiple annotated insurance contracts to obtain the trained extraction model.

The extraction of insurance rules is performed on a second type of insurance contracts by using the trained extraction model. The trained extraction model is used to select information corresponding to the locations in the second type of insurance contracts, such as, "insurance name", "cooling-off period", and "10 days".

After the information is obtained using the extraction model, manual filtering (e.g., manually checking and making up deficiency) is performed in order to improve the accuracy of the information extracted.

It is noted that the extracted information is also processed manually in the form of insurance rules, and the plurality of insurance rules are divided into the primary rules and sub-rules, so as to generate interrelated or subordinate relationships between the plurality of insurance rules, and generate a triplet based on the relationships among the subjects of each insurance rule.

The extracted insurance rules are provided as follows through examples.

Example 1, {"from_file": "Insurance Annotation Data - Wang.xlsx", "paragraph_text": "The cooling-off period is 10 days from the date you sign this additional contract", "complete": 1.0, "object": ["10 days"], "predicate": "cooling-off_period", "label": "yes", "query_text": "cooling-off_period", "subject": ""}.

Example 2, {"from_file": "Insurance Annotation Data-Zhang.xlsx", "paragraph_text": "within 2 years after the suspension of this contract, the policyholder may apply for reinstatement of the contract", "complete": 1.0, "object": ["2 years"], "predicate": "years for reinstatement", "label": "yes", "query_text": "years for reinstatement", "subject": ""}.

The above examples are only some insurance rules involved in one type of insurance, not all of the insurance rules.

In practice, each insurance rule is stored in a JavaScript Object Notation (JSON) form, that is, the insurance rule is stored as a dictionary in python, with many Key-Value pairs. For example, an insurance rule is: Insurance name: XX Comprehensive Personal Accident Insurance I; cooling-off period: 10 days.

Python is an interpreted, object-oriented, dynamic data high-level programming design language.

At S302, an insurance knowledge graph is generated based on the plurality of insurance rules, in which each insurance rule is presented in a triplet in the insurance knowledge graph.

The insurance knowledge graph is generated based on the obtained insurance rules, which are presented by the SPO triplet. Multiple SPO triplets are connected one by one and written to the graph database corresponding to the insurance knowledge graph.

The triplet is provided as follows through examples.

Example 1, S: XX comprehensive personal accident insurance I, P: statute of limitation, O: two years.

Example 2, S: XX comprehensive personal accident insurance I, P: General approval time for benefit payment, O: 5 days.

In the process of generating the graph, the identical S is determined as the same node to generate the insurance knowledge graph.

It may be understood that each insurance rule is represented by SPO, and S in the primary rule is the insurance name, i.e., the type of insurance. It is possible that S in a sub-rule is O in the primary rule.

For example, there are some situations that are not covered by XX comprehensive personal accident insurance I. In this case, an insurance rule is: S is XX comprehensive personal accident insurance I, P is not covered by the insurance, O represents an ID that points to the next insurance rule. Since there are many situations that are not covered by the insurance and cannot be reflected in one insurance rule, the next insurance rule that is pointed includes: those that are not covered/insured, such as alcoholism, and drug addiction, which are sub-rules. Then, an association relationship similar to the relationship between the primary rule and the sub-rule is formed.

At S303, a reasoning engine is generated based on the plurality of insurance rules, in which the reasoning engine is configured to: obtain a user question entered by a client, and obtain a target insurance rule matching the user question from the plurality of insurance rules; search for an answer in the insurance knowledge graph based on the target insurance rule; and return the answer to the client.

The whole working process of the reasoning engine includes:
obtaining a speech of a client and matching with insurance rules;
raising questions to the client for the portion of the insurance rules that exists but is not submitted by a user;
continuing to obtain user statements until rule matching is completed;
searching the insurance knowledge graph for a relevant answer based on the matched insurance rules; and
returning the answer required by the user.

With the method for generating a knowledge answering system according to the embodiment of the invention, the insurance rules are extracted from massive existing insurance documents, the insurance graph is generated based on the insurance rules, and the reasoning engine is generated based on the insurance rules. The reasoning engine can understand the user intention clearly in the multiple rounds of question and answer, and provide a more precise answer, thereby greatly reducing labor costs

As an implementation of the method for knowledge answering shown in the drawings of the embodiments, the invention provides a virtual apparatus for implementing the knowledge answering method. FIG. 4 is a schematic diagram of an apparatus for knowledge answering according to the embodiment of the invention. As illustrated in FIG. 4, the apparatus includes: a match module 401, a search module 402 and a feedback module 403.

The match module 401 is configured to obtain a user question entered by a client, and obtain a target insurance rule matching the user question from a plurality of insurance rules.

The search module 402 is configured to search for an answer in an insurance knowledge graph based on the target insurance rule, in which the insurance knowledge graph is generated based on the plurality of insurance rules.

The feedback module 403 is configured to return the answer to the client.

In an embodiment of the invention, the match module 401 is further configured to:
obtain the user question entered by the client, and obtain a match result by matching the user question with the plurality of insurance rules, in which the match result includes at least one insurance rule involving in the user question;
in response to the match result comprising a plurality of insurance rules, send based on a portion of the plurality of insurance rules in the match result that is irrelevant to the user question, a system question to the client in a preset order, obtain a current match result by continuing to match a user reply feedback by the client with the match result until an insurance rule is included in the current match result;
determine the insurance rule included in the current match result as the target insurance rule.

In an embodiment of the invention, when obtaining the match result by matching the user question with the plurality of insurance rules, the match module 401 is configured to:
obtain a plurality of regularized insurance rules by performing a regular process on the plurality of insurance rules; and
obtain the match result by matching the user question with the plurality of regularized insurance rules.

In an embodiment of the invention, when obtaining the match result by matching the user question with the plurality of insurance rules, the match module 401 is configured to:
obtain the match result by determining whether the user question matches each insurance rule through a preset question-answer model, in which the preset question-answer model is configured to perform binary classification determining on inputs consisted of the user question and each insurance rule.

In an embodiment of the invention, the match module 401 is further configured to:
obtain the user question entered by the client, and filter invalid contents in the user question; and
obtain the target insurance rule matching the user question from the plurality of insurance rules based on the filtered user question.

With respect to the apparatus in the above embodiments, the specific manner in which each module performs the operation has been described in detail in the method embodiments, which will not be described in detail here.

With the apparatus for knowledge answering according to the embodiments of the invention, the insurance rule matching the user question is obtained from the plurality of insurance rules through multiple rounds of question and answer, thus the specific meaning of the user question can be clarified through the multiple rounds of question and answer. Then, the only answer can be obtained by querying the insurance knowledge graph generated according to the insurance rules based on the matched insurance rule, and the obtained more accurate answer is returned to the client.

As an implementation of a method for generating a knowledge answering system as shown in the figures of the embodiments, the invention provides an embodiment of a virtual device for implementing the method for generating a knowledge answering system, FIG. 5 is a schematic diagram of the apparatus for generating a knowledge answering system according to the embodiment of the invention. As illustrated in FIG. 5, the apparatus includes: an extract module 501, a graph generation module 502 and an engine generation module 503.

The extract module 501 is configured to extract a plurality of insurance rules based on insurance information.

The graph generation module 502 is configured to generate an insurance knowledge graph based on the plurality of insurance rules, in which each insurance rule is presented as a triplet in the insurance knowledge graph.

The engine generation module 503 is configured to generate a reasoning engine based on the plurality of insurance rules, wherein the reasoning engine is configured to:
obtain a user question entered by a client, and obtain a target insurance rule matching the user question from the plurality of insurance rules;
search for an answer in the insurance knowledge graph based on the target insurance rule; and
return the answer to the client.

With the apparatus for generating a knowledge answering system according to the embodiment of the invention, the insurance rules are extracted from massive existing insurance documents, the insurance graph is generated based on the insurance rules, and the reasoning engine is generated based on the insurance rules. The reasoning engine can understand the user intention clearly in the multiple rounds of question and answer, and provide a more precise answer, thereby greatly reducing labor costs

According to the embodiments of the invention, the invention also provides an electronic device and a readable storage medium.

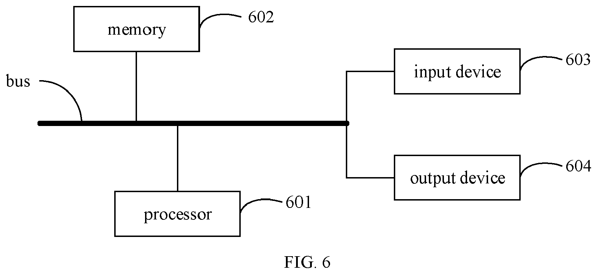

FIG. 6 is a block diagram of an electronic device used to implement a knowledge answering method or a method for generating a knowledge answering system according to the embodiments of the invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the invention. The memory stores instructions executable by at least one processor, so that the at least one processor executes the knowledge answering method or the method for generating a knowledge answering system according to the invention. The non-transitory computer-readable storage medium of the invention stores computer instructions, which are used to cause a computer to execute the knowledge answering method or the method for generating a knowledge answering system according to the invention.

As a non-transitory computer-readable storage medium, the memory 602 is configured to store non-transitory software programs, non-transitory computer-executable programs and modules, such as program instructions/modules (e.g., the match module 401, the search module 402 and the feedback module 403 shown in FIG. 4, or the extraction module 501, the graph generation module 502 and the engine generation module 503 shown in FIG. 5) corresponding to the knowledge answering method or the method for generating a knowledge answering system according to the embodiments of the invention. The processor 601 executes various functional applications and data processing of the server by running the non-transitory software programs, instructions, and modules stored in the memory 602, to implement the knowledge answering method or the method for generating a knowledge answering system in the above method embodiments.

The memory 602 may include a storage program area and a storage data area, where the storage program area may store an operating system and application programs required for at least one function. The storage data area may store data created according to the use of the electronic device for implementing the knowledge answering method or the method for generating a knowledge answering system. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the knowledge answering method or the method for generating a knowledge answering system through a network. Examples of the above network include, but are not limited to, the Internet, an intranet, a local area network, a mobile communication network, and combinations thereof.

The electronic device for implementing the knowledge answering method or the method for generating a knowledge answering system through a network may further include: an input device 603 and an output device 604. The processor 601, the memory 602, the input device 603 and the output device 604 may be connected by a bus or in other ways, and the connection by a bus is taken as an example in FIG. 6.

The input device 603 may receive inputted numeric or character information, and generate key signal inputs related to user settings and function control of an electronic device for implementing the knowledge answering method or the method for generating a knowledge answering system, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a Liquid Crystal Display (LCD), a Light Emitting Diode (LED) display, and a plasma display. In some embodiments, the display device may be a touch screen.

Various embodiments of the systems and technologies described herein may be implemented in digital electronic circuit systems, integrated circuit systems, Application Specific Integrated Circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, Programmable Logic Devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a LCD monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, intermediate computing components, or front-end components. The components of the system may be interconnected by any form or medium of digital data communication (e.g., a communication network). Examples of communication networks include: a Local Area Network (LAN), a Wide Area Network (WAN), the Internet and the block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and Virtual Private Server (VPS) service. The server can also be a server of distributed system or a server combined with block-chain.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention.

## Claims

1. A method for knowledge answering, performed by an electronic device, comprising:
receiving (S101) a user question entered by a client, and obtaining a target insurance rule matching the user question from a plurality of insurance rules;
searching (S102, S204) for an answer in an insurance knowledge graph based on the target insurance rule, wherein the insurance knowledge graph is generated based on the plurality of insurance rules; and
returning (S103, S205) the answer to the client.

2. The method of claim 1, wherein obtaining the target insurance rule matching the user question from the plurality of insurance rules, comprises:
obtaining (S201) a match result by matching the user question with the plurality of insurance rules, wherein the match result comprises at least one insurance rule involving in the user question;
in response to determining that the match result comprises a plurality of insurance rules, sending (S202) based on a portion of the plurality of insurance rules that is irrelevant to the user question, a system question to the client in a preset order, and obtaining a current match result by continuing to match a user reply to the system question with the match result, until one insurance rule is included in the current match result; and
determining (S203) the insurance rule included in the current match result as the target insurance rule.

3. The method of claim 2, wherein obtaining the match result by matching the user question with the plurality of insurance rules, comprises:
obtaining a plurality of regularized insurance rules by performing a regular process on the plurality of insurance rules; and
obtaining the match result by matching the user question with the plurality of regularized insurance rules.

4. The method of claim 2, wherein obtaining the match result by matching the user question with the plurality of insurance rules, comprises:
obtaining the match result by determining whether the user question matches each of the insurance rules through a preset question-answer model, wherein the preset question-answer model is configured to perform binary classification determining on both the user question and each of the insurance rules.

5. The method of any one of claims 1 to 4, wherein obtaining the target insurance rule matching the user question from the plurality of insurance rules, comprise:
filtering invalid contents in the user question; and
obtaining the target insurance rule matching the user question from the plurality of insurance rules based on the filtered user question.

6. A method for generating a knowledge answering system, performed by an electronic device, comprising:
extracting (S301) a plurality of insurance rules based on insurance information by using a pre-trained extraction model;
generating (S302) an insurance knowledge graph based on the plurality of insurance rules, wherein each of the insurance rules is presented as a triplet in the insurance knowledge graph; and
generating (S303) a reasoning engine based on the plurality of insurance rules, wherein the reasoning engine is configured to:
receive a user question entered by a client, and obtain a target insurance rule matching the user question from the plurality of insurance rules;
search for an answer in the insurance knowledge graph based on the target insurance rule; and
return the answer to the client.

7. An apparatus for knowledge answering, comprising:
a match module (401), configured to receive a user question entered by a client, and obtain a target insurance rule matching the user question from a plurality of insurance rules;
a search module (402), configured to search for an answer in an insurance knowledge graph based on the target insurance rule, wherein the insurance knowledge graph is generated based on the plurality of insurance rules; and
a feedback module (403), configured to return the answer to the client.

8. The apparatus of claim 7, wherein the match module is further configured to:
obtain a match result by matching the user question with the plurality of insurance rules, wherein the match result comprises at least one insurance rule involving in the user question;
in response to determining that the match result comprises a plurality of insurance rules, send based on a portion of the plurality of insurance rules that is irrelevant to the user question, a system question to the client in a preset order, obtain a current match result by continuing to match a user reply to the system question with the match result until one insurance rule is included in the current match result; and
determine the insurance rule included in the current match result as the target insurance rule.

9. The apparatus of claim 8, wherein the match module is further configured to:
obtain a plurality of regularized insurance rules by performing a regular process on the plurality of insurance rules; and
obtain the match result by matching the user question with the plurality of regularized insurance rules.

10. The apparatus of claim 8, wherein the match module is further configured to:
obtain the match result by determining whether the user question matches each of the insurance rules through a preset question-answer model, wherein the preset question-answer model is configured to perform binary classification determining on both the user question and each insurance rule.

11. The apparatus of any one of claims 7 to 10, wherein the match module is further configured to:
filter invalid contents in the user question; and
obtain the target insurance rule matching the user question from the plurality of insurance rules based on the filtered user question.

12. An apparatus for generating a knowledge answering system, comprising:
an extract module (501), configured to extract a plurality of insurance rules based on insurance information by using a pre-trained extraction model;
a graph generation module (502), configured to generate an insurance knowledge graph based on the plurality of insurance rules, wherein each of the insurance rules is presented as a triplet in the insurance knowledge graph; and
an engine generation module (503), configured to generate a reasoning engine based on the plurality of insurance rules, wherein the reasoning engine is configured to:
obtain a user question entered by a client, and obtain a target insurance rule matching the user question from the plurality of insurance rules;
search for an answer in the insurance knowledge graph based on the target insurance rule; and
return the answer to the client.

13. An electronic device, comprising:
at least one processor; and
a memory communicatively coupled to the at least one processor; wherein,
the memory stores instructions executable by the at least one processor, when the instructions are executed by the at least one processor, the at least one processor is caused to implement the method according to any one of claims 1-5 or the method according to claim 6.

14. A non-transitory computer-readable storage medium having computer instructions stored thereon, wherein the computer instructions are configured to cause a computer to implement the method according to any one of claims 1-5 or the method according to claim 6.

15. A computer program product comprising computer programs, wherein when the computer programs are executed by a processor, the method according to any one of claims 1-5 or the method according to claim 6 is implemented.
